# EUROPÄISCHE PATENTSCHRIFT

(11) **EP 3 044 051 B1**
(45) Veröffentlichungstag und Bekanntmachung des Hinweises auf die Patenterteilung: **27.05.2020**
(21) Anmeldenummer: 14752805.3
(22) Anmeldetag: 07.08.2014
(51) Int. Cl.: B60S 1/38, B60S 1/34

(54) **FILMSCHARNIER FÜR EINE SCHEIBENWISCHVORRICHTUNG**
FILM HINGE FOR A WINDSCREEN WIPING DEVICE
CHARNIÈRE PELLICULAIRE POUR UN DISPOSITIF D'ESSUIE-GLACE

(30) Priorität: 09.09.2013 DE 102013217981
(43) Veröffentlichungstag der Anmeldung: 20.07.2016
(73) Patentinhaber: Robert Bosch GmbH, 70442 Stuttgart (DE)
(72) Erfinder: HACKL, Viktor, H-9400 Sopron (HU); DEAK, Peter, H-1188 Budapest (HU); WEILER, Michael, 77815 Buehl (DE); GELETA, Attila, H-1145 Budapest (HU)
(86) Internationale Anmeldenummer: PCT/EP2014/066957
(87) Internationale Veröffentlichungsnummer: WO 2015/032579

(56) Entgegenhaltungen:
- WO-A1-2015/007350
- DE-A1- 2 315 454
- FR-A1- 2 248 174
- GB-A- 2 336 765
- US-A- 3 131 414

## Beschreibung

Die Erfindung betrifft eine Scheibenwischvorrichtung für ein Fahrzeug, insbesondere ein Kraftfahrzeug, weiterhin insbesondere ein Filmscharnier.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischerarm über die Antriebswelle mit einem Wischermotor verbunden. Insbesondere auf Windschutzscheiben mit starken Krümmungsänderungen verliert das Wischblatt leicht den Kontakt zur Scheibe. Hierdurch kann es, insbesondere bei stark gekrümmten Scheiben zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es eine Bedürfnis, Scheibenwischvorrichtungen weiter zu verbessern.

Bei der Verbesserung gibt es eine Mehrzahl von Randbedingungen, die zusätzlich berücksichtigt werden sollten. Zu diesen gehören der Aufwand bei der Herstellung bzw. die Herstellungskosten, die Materialkosten, aber auch die Eigenschaften der Scheibenwischvorrichtung, insbesondere die Funktion unter vielfältigen Bedingungen sowie die Langlebigkeit unter einer Vielzahl von Bedingungen. Es gilt bei Wischvorrichtungen für Fahrzeuge dabei zu berücksichtigen, dass der Kostendruck stetig steigt und dass die Fahrzeuge in einer Vielzahl von klimatischen Bedingungen zum Einsatz kommen können, so dass z.B. extreme Temperaturwerte dauerhaft und/oder mit großen Schwankungen auftreten. Zudem werden Scheibenwischvorrichtungen unterschiedlichen Belastungen ausgesetzt, wie beispielsweise Winddruckbelastungen oder Belastungen beim Durchfahren einer Waschstraße, denen sie standhalten müssen. Dabei sind insbesondere die Gelenke von Scheibenwischeinrichtungen besonders anfällig für Beschädigungen. GB-A-2336765 offenbart den Oberbegriff des Anspruchs 1.

### Offenbarung der Erfindung

Es ist die Aufgabe der vorliegenden Erfindung, eine Scheibenwischvorrichtung bereitzustellen, mit welcher zumindest einer oder mehrere der oben genannten Nachteile verringert werden oder im Wesentlichen nicht auftreten und/oder mit welcher ein zuverlässiges, weitgehend schlierenfreies Wischen einer Scheibe eines Fahrzeugs gewährleisten wird.

Diese Aufgabe wird gelöst durch eine Scheibenwischvorrichtung mit den Merkmalen gemäß Anspruch 1.

Gemäß Ausführungsformen der vorliegenden Erfindung wird eine Scheibenwischvorrichtung für ein Fahrzeug, insbesondere ein Kraftfahrzeug, vorgeschlagen. Die Scheibenwischvorrichtung umfasst ein Wischblatt mit einem langgestreckten Oberteil und einem langgestreckten Unterteil, welche zumindest teilweise biegbar ausgestaltet sind. Des Weiteren sind mehrere Verbindungselemente zum Verbinden des Oberteils und des Unterteils vorgesehen, wobei die Verbindungselemente entlang einer Längserstreckung des Wischblatts voneinander beabstandet sind. Die Verbindungselemente sind ausgelegt, um eine Bewegung des Oberteils und des Unterteils relativ zu einander mit einer Bewegungskomponente entlang einer Längserstreckung des Wischblatts zu ermöglichen. Ferner sind die Verbindungselemente über jeweils ein Filmscharnier mit dem Oberteil und/oder mit dem Unterteil verbunden. Des Weiteren weist die Scheibenwischvorrichtung eine Stoppvorrichtung auf, welche konfiguriert ist, um eine Rotationsbewegung der Verbindungselemente relativ zu zumindest einem von dem langgestreckten Oberteil und dem langestreckten Unterteil zu begrenzen.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Die vorliegende Erfindung und ihre Ausführungsformen ermöglichen vorteilhafterweise eine besonders gute Anpassung der Scheibenwischvorrichtung an die Krümmung einer Scheibe. Nicht gewischte Bereiche der Scheibe und eine Schleierbildung auf der Scheibe können weitgehend vermieden werden. Ferner wird durch die konstruktive Ausgestaltung der hierin beschriebenen Scheibenwischvorrichtung mit der Stoppvorrichtung gemäß den hierin beschriebenen Ausführungsformen eine Scheibenwischvorrichtung bereitgestellt, die besonders widerstandsfähig ist. Insbesondere kann durch die hierin beschrieben Ausführungsformen eine übermäßige Belastung der Filmscharniere vermieden, was zu einer hohen Langlebigkeit der Scheibenwischvorrichtung führt.

Gemäß Ausführungsformen der Offenbarung, wird die Stoppvorrichtung dadurch gebildet wird, dass das Filmscharnier zumindest teilweise in einer Aussparung des langgestreckten Oberteils und/ oder Unterteils, insbesondere in einer Aussparung des langgestreckten Unterteils, angeordnet ist. Somit wird eine Scheibenwischvorrichtung bereitgestellt, mit welcher eine übermäßige Belastung der Filmscharniere vermieden werden kann. Insbesondere wird eine Rotationsbewegung der Verbindungselemente relativ zu dem langgestreckten Oberteil und/oder dem langestreckten Unterteil derart begrenzt, dass die Filmscharniere, welche mit dem Oberteil und/oder mit dem Unterteil verbunden sind, vor einer übermäßigen Belastung geschützt sind.

Gemäß weiteren Ausführungsformen der Offenbarung, die mit anderen Ausführungsformen kombiniert werden können, ist die Stoppvorrichtung zumindest an einer Vielzahl der Enden der Verbindungselemente angeordnet und durch zumindest einen verbreiterten Endbereich an der Vielzahl der Enden der Verbindungselemente gebildet wird, um eine Rotationsbewegung der Verbindungselemente relativ zu dem langgestreckten Oberteil und/oder relativ zu dem langgestreckten Unterteil zu begrenzen. Somit wird eine Scheibenwischvorrichtung mit einer Stoppvorrichtung bereitgestellt, mit welcher eine übermäßige Belastung der Filmscharniere effektiv vermieden werden kann.

Gemäß noch weiteren Ausführungsformen der Offenbarung, die mit anderen hierin beschriebenen Ausführungsformen kombiniert werden können, wird die Stoppvorrichtung durch eine Vielzahl von Fortsätzen gebildet, welche an dem langgestreckten Oberteil und/oder Unterteil angeordnet sind und sich im Wesentlichen quer zur Längserstreckung des Wischblatts erstrecken, um eine Rotationsbewegung einer Vielzahl von Verbindungselementen relativ zu dem langgestreckten Oberteil und/oder relativ zu dem langgestreckten Unterteil zu begrenzen. Somit wird eine Scheibenwischvorrichtung bereitgestellt, mit welcher eine übermäßige Belastung der Filmscharniere effektiv vermieden werden kann. Ferner kann über den Abstand zwischen den Fortsätzen und der Verbindungselemente die Rotationsfreiheit der Verbindungselemente relativ zu dem langgestreckten Oberteil bzw. relativ zu dem langgestreckten Unterteil eingestellt werden.

Gemäß Ausführungsformen der Offenbarung, die mit anderen hierin beschriebenen Ausführungsformen kombiniert werden können, ist das Filmscharnier einteilig mit dem Verbindungselement und/oder dem Oberteil oder dem Unterteil ausgebildet ist. Die einteilige Ausgestaltung der Filmscharniere erlaubt eine einfache und kostengünstige Herstellung. So können die Wischblätter bzw. die Scheibenwischvorrichtungen bei entsprechender Ausgestaltung werkzeugfallend zur Verfügung gestellt werden. Darüber hinaus wird durch die Verwendung von Filmscharnieren, insbesondere durch die einteilig Ausführung der Filmscharniere mit den Verbindungselementen und dem Oberteil oder dem Unterteil eine Herstellung im Spritzgussverfahren ermöglicht

Gemäß Ausführungsformen der Offenbarung, die mit anderen hierin beschriebenen Ausführungsformen kombiniert werden können, weist das Filmscharnier eine Dicke von 0,1 mm bis 0,8 mm, insbesondere 0,2 bis 0,4 mm auf. Dabei erlaubt die Dimensionierung der Filmscharnierdicken eine Einstellung der Biegesteifigkeit zu einem vorbestimmten Wert. Gemäß hierein beschriebener Ausführungsformen weisen die Filmscharniere typischerweise eine Biegesteifigkeit von 75 Nmm/rad oder kleiner auf.

Gemäß Ausführungsformen der Offenbarung, die mit anderen hierin beschriebenen Ausführungsformen kombiniert werden können, besteht das das Filmscharnier aus mindestens einem Material aus der Gruppe bestehend aus: POM, PA, TPE, insbesondere TPE-S, TPE-O, TPE-U, TPE-A TPE-V und TPE-E ist. Die Materialwahl der Filmscharniere, insbesondere in Verbindung mit der Dicke der Scharniere, erlaubt für eine Biegesteifigkeit bei einem vorbestimmten Wert oder darunter und ermöglicht darüber hinaus eine Herstellung im Spritzgussverfahren, insbesondere in einem 2-Komponenten Spritzverfahren, bei entsprechenden Eigenschaften des Wischblatts, z.B. einer ausreichenden Kriechbeständigkeit der Filmscharniere.

Gemäß Ausführungsformen der Offenbarung, die mit anderen hierin beschriebenen Ausführungsformen kombiniert werden können, weist das das Filmscharnier zumindest einen ersten Durchbruch quer zu einer Längserstreckung des Filmscharniers aufweist. Durch die Dimensionierung des ersten Durchbruchs, beispielsweise durch die Länge und Höhe des ersten Durchbruchs kann die Steifigkeit des Filmscharniers eingestellt werden.

Gemäß Ausführungsformen der Offenbarung, die mit anderen hierin beschriebenen Ausführungsformen kombiniert werden können, weist das Oberteil in einem Bereich, in welchem das Filmscharnier angeordnet ist, zumindest einen zweiten Durchbruch in Dickenrichtung des Oberteils aufweist. Durch die Dimensionierung des zweiten Durchbruchs, beispielsweise durch die Länge des zweiten Durchbruchs und die Breite des zweiten Durchbruchs kann die Steifigkeit des Filmscharniers eingestellt werden.

### Kurze Beschreibung der Zeichnungen

Ausführungsbeispiele der Erfindung sind in den Figuren dargestellt und werden im Folgenden näher beschrieben. Es zeigen:
Figur 1 eine schematische Darstellung eines Ausschnitts eines Wischblatts einer Scheibenwischvorrichtung gemäß Ausführungsformen der Offenbarung,
Figur 2 eine schematische Darstellung einer Stoppvorrichtung der Scheibenwischvorrichtung gemäß Ausführungsformen der Offenbarung,
Figur 3A eine schematische Darstellung einer Stoppvorrichtung der Scheibenwischvorrichtung gemäß Ausführungsformen der Offenbarung,
Figur 3B eine schematische Darstellung einer Stoppvorrichtung der Scheibenwischvorrichtung gemäß Ausführungsformen der Offenbarung,
Figur 3C eine schematische Darstellung einer Stoppvorrichtung der Scheibenwischvorrichtung gemäß Ausführungsformen der Offenbarung,
Figur 4A eine schematische Darstellung eines Filmscharniers der Scheibenwischvorrichtung gemäß Ausführungsformen der Offenbarung,
Figur 4B eine schematische Darstellung eines Filmscharniers der Scheibenwischvorrichtung gemäß Ausführungsformen der Offenbarung,
Figur 5A eine schematische Darstellung eines Wischblatts einer Scheibenwischvorrichtung gemäß Ausführungsformen der Offenbarung in einer Grundstellung,
Figur 5B eine schematische Darstellung des Wischblatts einer Scheibenwischvorrichtung gemäß Ausführungsformen der Offenbarung nach Fig. 5A in einer an eine Scheibe angelegten Stellung,
Figur 6A eine schematische Darstellung eines weiteren Ausführungsbeispiels einer erfindungsgemäßen Scheibenwischvorrichtung in Form eines Wischerarms mit integriertem Wischblatt in einer Grundstellung,
Figur 6B eine schematische Darstellung des Wischerarms mit integriertem Wischblatt nach Fig. 6A in einer an eine Scheibe angelegten Stellung,
Figur 7 eine schematische perspektivische Darstellung eines Wischerarms einer Scheibenwischvorrichtung gemäß Ausführungsformen der Offenbarung,
Figur 8A eine schematische Darstellung eines Ausschnitts des Wischblatts nach Fig. 6A,
Figur 8B eine schematische Darstellung eines Ausschnitts des Wischblatts nach Fig. 6B.

### Ausführungsformen der Erfindung

Im Folgenden werden, sofern nicht anders vermerkt, für gleiche und gleichwirkende Elemente gleiche Bezugszeichen verwendet.

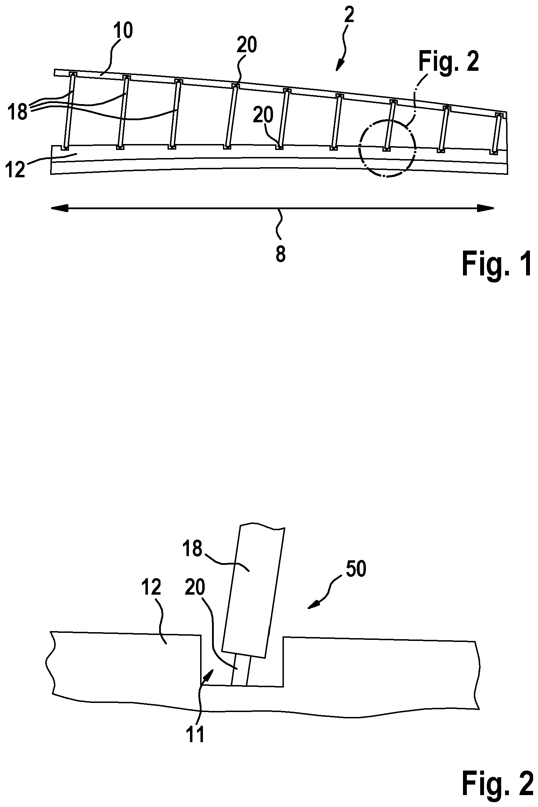

Figur 1 zeigt eine schematische Darstellung eines Ausschnitts eines Wischblatts 2 einer Scheibenwischvorrichtung gemäß Ausführungsformen der Offenbarung. Das Wischblatt 2 der Scheibenwischvorrichtung umfasst ein langgestrecktes Oberteil 10 und einem langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 des Wischblatts voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung 8 des Wischblatts zu ermöglichen. Ferner sind die Verbindungselemente über jeweils ein Filmscharnier 20 mit dem Oberteil 10 und/oder mit dem Unterteil 12 verbunden.

Somit wird eine Scheibenwischvorrichtung bereitgestellt, mit welcher ein besonders gutes und exaktes Wischen der Scheibe gewährleistet werden kann. Nicht gewischte Bereiche der Scheibe und eine Schleierbildung auf der Scheibe können weitgehend vermieden werden. Ferner wird durch die konstruktive Ausgestaltung der hierin beschriebenen Scheibenwischvorrichtung ein genaues Anpassen der Scheibenwischvorrichtung an innerhalb der Scheibe auftretende Krümmungsänderungen ermöglicht. Ein weitgehend gleichmäßiger Kontaktdruck auf die Scheibenwischvorrichtung, insbesondere auf ihr Unterteil, wird auch bei starken Krümmungen und Krümmungsänderungen der Scheibe erreicht. Gegenüber herkömmlichen Scheibenwischvorrichtungen ist es bei der erfindungsgemäßen Scheibenwischvorrichtung vorteilhafterweise nicht erforderlich, eine vorhergehende Einstellung des Oberteils und/oder des Unterteils an die Krümmung der zu wischenden Scheibe vorzunehmen. Die Anpassung an die Krümmung der Scheibe erfolgt bei der erfindungsgemäßen Scheibenwischvorrichtung schnell, unkompliziert und weitgehend selbstständig. Ein und dieselbe Scheibenwischvorrichtung ist daher einfachheitshalber für eine große Anzahl von Fahrzeugen einsetzbar.

Gemäß Ausführungsformen der Offenbarung weist die Scheibenwischvorrichtung eine Stoppvorrichtung 50 auf. Beispielhafte Ausführungsformen der Stoppvorrichtung sind in den Figuren 2 bis 3C dargestellt ist. Gemäß den hierin beschriebenen Ausführungsformen ist die Stoppvorrichtung 50 konfiguriert, um eine Rotationsbewegung der Verbindungselemente 18 relativ zu zumindest einem von dem langgestreckten Oberteil 10 und dem langestreckten Unterteil 12 zu begrenzen. Gemäß Ausführungsformen der Offenbarung, die mit anderen hierin beschriebenen Ausführungsformen kombiniert werden können, wird die Stoppvorrichtung 50 dadurch gebildet wird, dass das Filmscharnier 20 zumindest teilweise in einer Aussparung 11 des langgestreckten Unterteils 12 angeordnet ist, wie es beispielhaft in Figur 2 dargestellt ist. Ferner kann die Stoppvorrichtung 50 auch dadurch gebildet werden, dass das Filmscharnier 20 zumindest teilweise in einer Aussparung des langgestreckten Oberteils 10 und/ oder des langgestreckten Unterteils 12 angeordnet ist.

Somit wird zum einen eine Scheibenwischvorrichtung bereitgestellt, welche eine besonders gute Anpassung an die Krümmung einer Scheibe ermöglicht und zum anderen widerstandsfähig ist. Insbesondere wird durch die hierin beschriebenen Ausführungsformen mit der Stoppvorrichtung eine Scheibenwischvorrichtung bereitgestellt, mit welcher eine übermäßige Belastung der Filmscharniere vermieden werden kann. Durch die Bereitstellung einer Stoppvorrichtung gemäß den hierein beschrieben Ausführungsformen wird eine Rotationsbewegung der Verbindungselemente relativ zu dem langgestreckten Oberteil und/oder dem langestreckten Unterteil derart begrenzt, dass die Filmscharniere, welche mit dem Oberteil und/oder mit dem Unterteil verbunden sind, vor einer übermäßigen Belastung geschützt sind.

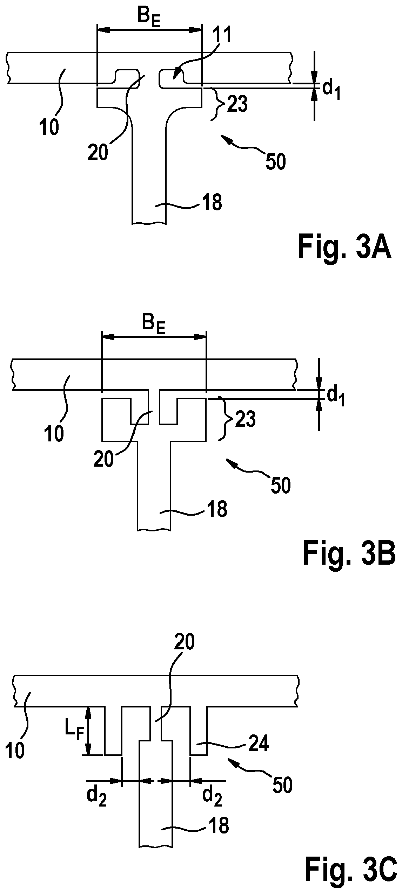

Gemäß Ausführungsformen der Offenbarung kann die Stoppvorrichtung 50 auch zumindest an einer Vielzahl der Enden der Verbindungselemente 18 angeordnet sein und durch zumindest einen verbreiterten Endbereich 23 an der Vielzahl der Enden der Verbindungselemente 18 gebildet werden, wie es beispielhaft in Figur 3A dargestellt ist. Dabei kann ein Verbindungselement der Vielzahl der Verbindungselemente an einem Ende oder an beiden Enden einen verbreiterten Endbereich aufweisen. Dadurch kann eine Rotationsbewegung der Verbindungselemente 18 relativ zu dem langgestreckten Oberteil 10 und/oder relativ zu dem langgestreckten Unterteil 12 begrenzt werden. Über die Breite B_{E} des verbreiterten Endbereichs der Verbindungselemente 18 kann die Rotationsfreiheit der Verbindungselemente relativ zu dem langgestreckten Oberteil und/oder relativ zu dem langgestreckten Unterteil eingestellt werden. Ferner kann über den Abstand d₁ zwischen dem verbreiterten Endbereich der Verbindungselemente 18 und des langgestreckten Oberteils 10 oder des langgestreckten Unterteils 12 die Rotationsfreiheit der Verbindungselemente relativ zu dem langgestreckten Oberteil bzw. relativ zu dem langgestreckten Unterteil eingestellt werden.

In Fig. 3A ist ein Ausschnitt einer beispielhaften Ausführungsform dargestellt, in welcher das Verbindungselement 18 einen verbreiterten Endbereich 23 aufweist und das Filmscharnier 20 in einer Aussparung 11 des langestreckten Oberteils angeordnet ist. Gemäß Ausführungsformen der Offenbarung, wie sie beispielhaft in Fig. 3B dargestellt ist, kann die Verbindung zwischen dem Verbindungselement 18 und dem Oberteil 10 auch ohne Aussparung 11 bereitgestellt werden.

Figur 3B zeigt eine schematische Darstellung einer Ausführungsform der Stoppvorrichtung, welche ähnlich zu der in Figur 3A dargestellten Stoppvorrichtung durch zumindest einen verbreiterten Endbereich 23 an der Vielzahl der Enden der Verbindungselemente 18 gebildet wird, wobei der verbreiterte Endbereich 23 U-förmig ausgebildet ist, so dass die Enden des U-förmigen Endbereichs Verbindungselemente 18 eine Rotationsbewegung der Vielzahl von Verbindungselementen 18 relativ zu dem langgestreckten Oberteil 10 und/oder relativ zu dem langgestreckten Unterteil 12 begrenzen können. Wie beispielhaft in Figur 3B gezeigt ist kann das Filmscharnier 20 zumindest teilweise in dem U-förmigen Endbereich der Verbindungselemente 18 aufgenommen sein.

Über die Breite B_{E} des verbreiterten U-förmigen Endbereichs der Verbindungselemente 18 kann die Rotationsfreiheit der Verbindungselemente relativ zu dem langgestreckten Oberteil und/oder relativ zu dem langgestreckten Unterteil eingestellt werden. Ferner kann über den Abstand d₁ zwischen den Enden des U-förmigen verbreiterten Endbereich der Verbindungselemente und des langgestreckten Oberteils oder des langgestreckten Unterteil die Rotationsfreiheit der Verbindungselemente relativ zu dem langgestreckten Oberteil bzw. relativ zu dem langgestreckten Unterteil eingestellt werden.

Gemäß Ausführungsformen der Offenbarung kann die Stoppvorrichtung 50, wie sie beispielhaft in Fig. 3C dargestellt ist, auch durch eine Vielzahl von Fortsätze 24 gebildet werden, welche an dem langgestreckten Oberteil 10 und/oder dem langgestreckten Unterteil 12 angeordnet sind. Typischerweise erstrecken sich die Fortsätze 24 im Wesentlichen quer zur Längserstreckung 8 des Wischblatts, insbesondere in Richtung der Verbindungselemente in einer Grundstellung der Scheibenwischvorrichtung. Dadurch kann eine Rotationsbewegung einer Vielzahl von Verbindungselementen 18 relativ zu dem langgestreckten Oberteil 10 und/oder relativ zu dem langgestreckten Unterteil 12 begrenzt werden, so dass die Filmscharniere, welche mit dem Oberteil und/oder mit dem Unterteil verbunden sind, vor einer übermäßigen Belastung geschützt sind. Über die Länge L_{F} der Fortsätze 24 kann die Rotationsfreiheit der Verbindungselemente relativ zu dem langgestreckten Oberteil und/oder relativ zu dem langgestreckten Unterteil eingestellt werden. Ferner kann über den Abstand d₂ zwischen den Fortsätzen 24 und der Verbindungselemente 18 die Rotationsfreiheit der Verbindungselemente relativ zu dem langgestreckten Oberteil bzw. relativ zu dem langgestreckten Unterteil eingestellt werden.

Im Gegensatz zu den in den Figuren 2 beispielhaft dargestellten Ausführungsform muss bei den in den Figuren 3A bis 3C beispielhaft dargestellten Ausführungsformen das Filmscharnier nicht in einer Aussparung des langgestreckten Oberteils 10 oder des langgestreckten Unterteils angeordnet sein. Somit kann eine Stoppvorrichtung bereitgestellt werden, ohne die Stabilität des lang gestreckten Oberteils und/oder des langgestreckten Unterteilt zu beeinflussen.

Gemäß typischen Ausführungsformen, die mit anderen Ausführungsformen kombiniert werden können, kann eine Aussparung zur Begrenzung der Rotation des Filmscharniers, d.h. eine Stoppvorrichtung mit Aussparung, insbesondere an dem Unterteil 12 zur Verfügung gestellt werden. Gemäß weiteren typischen Ausführungsformen, die mit anderen Ausführungsformen kombiniert werden können, kann eine Begrenzung der Rotation des Filmscharniers ohne Aussparung, d.h. eine Stoppvorrichtung ohne Aussparung, insbesondere an dem Oberteil 10 zur Verfügung gestellt werden. Als Aussparung wird hierbei zum Beispiel eine Verjüngung der Materialstärke des Oberteils bzw. Unterteils senkrecht zur Längserstreckung des Wischblatts bezeichnet.

Gemäß den hierin beschrieben Ausführungsformen der Scheibenwischvorrichtung ist die Stoppvorrichtung 50, wie sie beispielhaft in den Figuren 2 bis 3C dargestellt ist, derart konfiguriert das eine Rotation der Verbindungselemente relativ zu dem langgestreckten Oberteil bzw. relativ zu dem langgestreckten Unterteil von höchstens ± 45°, insbesondere höchstens ± 30°, insbesondere höchstens ± 15° möglich ist.

Gemäß Ausführungsformen der Offenbarung, wie sie beispielhaft in den Figuren 2 bis 3C dargestellt sind, ist das Filmscharnier 20 einteilig mit dem Verbindungselement 18 und/oder dem Oberteil 10 oder dem Unterteil 12 ausgebildet. Die einteilige Ausgestaltung der Filmscharniere erlaubt eine einfache und kostengünstige Herstellung. So können die Wischblätter bzw. die Scheibenwischvorrichtungen bei entsprechender Ausgestaltung werkzeugfallend zur Verfügung gestellt werden.

Gemäß Ausführungsformen, die mit anderen Ausführungsformen kombiniert werden können, kann ein Filmscharnier, insbesondere ein mit dem Verbindungselement 18 einteilig ausgestaltetes Filmscharnier 20, derart zur Verfügung gestellt werden, dass die Breite des Verbindungselements 18 außerhalb des Scharnierbereichs von 1 mm bis 3 mm, zum Beispiel 1,5 mm ist, und die Breite im Bereich des Filmscharnier von 0,1 mm bis 0,8 mm, insbesondere 0,2 bis 0,4 mm, zum Beispiel 0,3 mm ist. Die Dimensionierung der Filmscharnierdicken erlaubt eine Einstellung der Biegesteifigkeit zu einem vorbestimmten Wert. Darüber hinaus wird durch die Verwendung von Filmscharnieren, insbesondere durch die einteilig Ausführung der Filmscharniere mit den Verbindungselementen und dem Oberteil 10 oder dem Unterteil 12 eine Herstellung im Spritzgussverfahren ermöglicht.

Gemäß Ausführungsformen der Offenbarung, welche mit anderen Ausführungsformen kombiniert werden können, kann das Filmscharnier aus einem Material aus der Gruppe bestehend aus: POM, PA, TPE (Thermoplastischem Elastomer), insbesondere TPE-S, TPE-O, TPE-U, TPE-A TPE-V und TPE-E sein. Die Materialwahl der Filmscharniere, insbesondere in Verbindung mit der Dicke der Scharniere, erlaubt für eine Biegesteifigkeit bei einem vorbestimmten Wert oder darunter und ermöglicht darüber hinaus eine Herstellung im Spritzgussverfahren, insbesondere in einem 2-Komponenten Spritzverfahren, bei entsprechenden Eigenschaften des Wischblatts, z.B. einer ausreichenden Kriechbeständigkeit der Filmscharniere. Gemäß hierein beschriebener Ausführungsformen weisen die Filmscharniere typischerweise eine Biegesteifigkeit von 75 Nmm/rad oder kleiner auf.

Gemäß den hierin beschriebenen Ausführungsformen können Materialien derart gewählt werden, um auch bei hohen Temperaturschwankungen und/oder bei andauernd hohen Umgebungstemperaturen Filmscharniereigenschaften bereitzustellen welche ein zuverlässiges bzw. langlebige Filmscharnier ermöglichen. Somit können zuverlässige Wischvorrichtungen auch für komplexere Anwendungsfelder zur Verfügung gestellt werden.

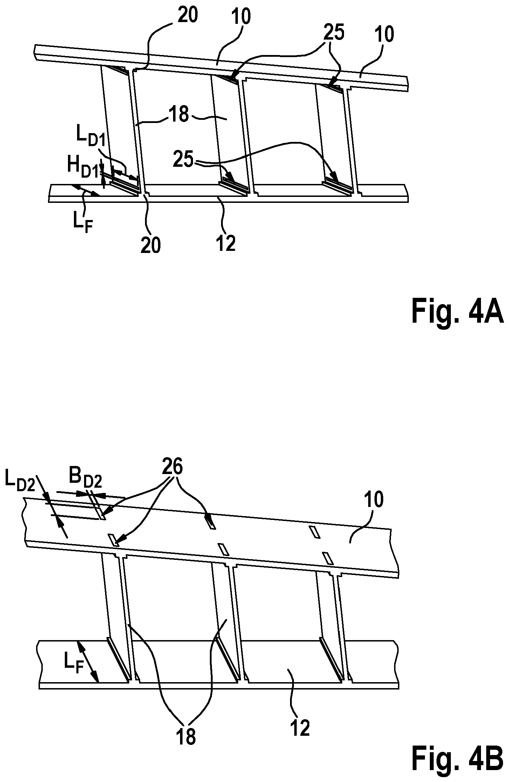

Gemäß Ausführungsformen der Offenbarung, welche mit anderen Ausführungsformen kombiniert werden können, weist das Filmscharnier 20 zumindest einen ersten Durchbruch 25 quer zu einer Längserstreckung L_{F} des Filmscharniers 20 auf. Wie in Fig. 4A beispielhaft gezeigt ist, kann das Filmscharnier dadurch bereitgestellt werden, dass an dem Ende des Verbindungselements 18, welches mit dem Oberteil 10 oder dem Unterteil 12 verbunden ist, ein erster Durchbruch 25 vorgesehen ist, so dass die Steifigkeit des Scharnierbereichs mittels des Durchbruchs 25 eingestellt werden kann. Durch die Dimensionierung des ersten Durchbruchs 25, beispielsweise durch die Länge L_{D1} des ersten Durchbruchs und die Höhe H_{D1} des ersten Durchbruchs kann die Steifigkeit des Filmscharniers eingestellt werden.

Gemäß Ausführungsformen der Offenbarung, welche mit anderen Ausführungsformen kombiniert werden können, weist das langestreckte Oberteil 10 der Scheibenwischvorrichtung in einem Bereich, in welchem das Filmscharnier 20 angeordnet ist, zumindest einen zweiten Durchbruch 26 in Dickenrichtung des Oberteils 10 auf. Wie beispielhaft in Figur 4B dargestellt, kann das Filmscharnier dadurch bereitgestellt werden, dass das langestreckte Oberteil 10 der Scheibenwischvorrichtung in einem Bereich, in welchem das Filmscharnier angeordnet sein soll einen zweiten Durchbruch 26 in Dickenrichtung des Oberteils 10 aufweist. Durch die Dimensionierung des zweiten Durchbruchs 26, beispielsweise durch die Länge L_{D2} des zweiten Durchbruchs und die Breite des zweiten Durchbruchs B_{D2} kann die Steifigkeit des Filmscharniers eingestellt werden.

Im Folgenden werden beispielhafte Ausführungsformen der Scheibenwischvorrichtung beschrieben, für welche die hierein beschriebene Stoppvorrichtung vorteilhafterweise verwendet werden kann.

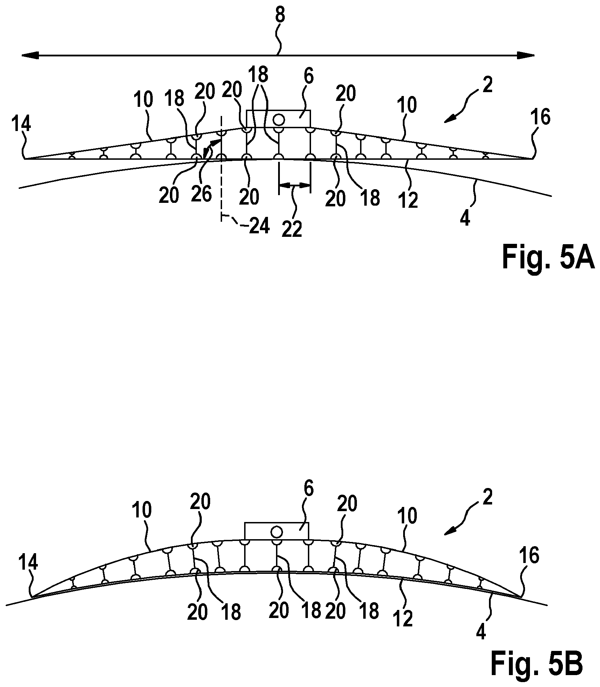

Figuren 5A und 5B zeigen schematische Darstellungen eines Wischblatts 2 in einer Grundstellung (Figur 5A) und in einer an eine Scheibe angelegten Stellung (Figur 5B) gemäß Ausführungsformen der Scheibenwischvorrichtung der Offenbarung. Das Wischblatt 2 dient zum Wischen einer Scheibe 4 eines Fahrzeugs, das zum Beispiel ein Kraftfahrzeug ist, insbesondere ein Auto. Üblicherweise ist das Wischblatt 2 an einem Scheibenwischerarm angebracht, der zum Wischen mittels eines Motors angetrieben wird. Dazu weist das Wischblatt 2 eine Halterung 6 auf, an der es an dem Scheibenwischerarm befestigt werden kann. Das Wischblatt 2 befindet sich in der Fig. 5A in einer Grundstellung, in der es zumindest teilweise von der Scheibe 4 abgehoben ist. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein, die in den Figuren 5A und 5B exemplarisch jeweils einteilig ausgebildet sind. Das ermöglicht eine besonders stabile Konstruktion. Es ist ebenso möglich, nur jeweils einen Teil des Oberteils 10 und/oder des Unterteils 12 biegbar auszugestalten. Ferner ist es alternativ möglich, dass das Oberteil 10 zweiteilig ausgestaltetist, wobei dann jeweils ein Ende der beiden Teile des zweiteiligen Oberteils 10 an der Halterung 6 befestigt sind.

Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit. Das Oberteil 10 und das Unterteil 12 sind so angeordnet, dass sie sich gegenüberliegen. Beide Enden des Oberteils 10 sind an äußeren Verbindungspositionen 14 und 16 mit jeweils einem Ende des Unterteils 12 fest verbunden. Ansonsten sind das Oberteil 10 und das Unterteil 12 voneinander beabstandet.

Das Oberteil 10 und das Unterteil 12 sind durch Verbindungselemente 18 miteinander verbunden. Insbesondere in der Grundstellung des Wischblatts 2, verlaufen diese in etwa quer zur Längserstreckung 8 des Wischblatts 2. Die Verbindungselemente 18 sind an einander zugewandten inneren Längsseiten des Oberteils 10 und des Unterteils 12 mittels Filmscharniere 20 befestigt. Durch die Verwendung von Filmscharnieren kann das Oberteil 10, das Unterteil 12 und/oder die Verbindungselemente 18 aus einem Kunststoffmaterial hergestellt werden.

Gemäß typischen hier beschriebenen Ausführungsformen, die mit anderen hier beschriebenen Ausführungsformen kombiniert werden können, kann ein Filmscharnier durch eine Verjüngung des Materials der Verbindungselement zur Erzeugung geringerer Steifigkeit der Verbindungselemente im Scharnierbereich, beispielsweise zwischen der Verbindung des Oberteils mit dem Verbindungselement oder zwischen der Verbindung des Unterteils mit dem Verbindungselement, zur Verfügung gestellt werden.

Ausführungsformen, bei denen das Gelenk durch ein Filmscharnier zur Verfügung gestellt ist, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe: POM, PA, TPE (Thermoplastischem Elastomer), insbesondere TPE-S, TPE-O, TPE-U, TPE-A TPE-V und TPE-E zur Verfügung gestellt werden.

Die Verbindungselemente 18 sind entlang der Längserstreckung des Wischblatts 2 voneinander beabstandet. Die Abstände zwischen jeweils zwei benachbarten Verbindungselementen 18 sind gleich. Sie können aber auch unterschiedlich gewählt werden. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils, und gute Anpassung an die Krümmung und Krümmungsänderungen der zu wischenden Scheibe gewährleistet werden.

In Figur 5A ist stellvertretend für die Abstände zwischen jeweils zwei Verbindungselementen 18 ein Abstand 22 dargestellt. Die Verbindungselemente 18 sind, insbesondere in der Grundstellung des Wischblatts 2, so an dem Unterteil 12 befestigt, dass ihre Längsachsen in Winkeln 26 zum Unterteil 12 verlaufen, die zwischen 65° und 115°, insbesondere zwischen 75° und 105°, liegen. Besonders vorteilhaft liegen die Winkel zwischen 80° und 100°. Dies gewährleistet vorteilhafterweise eine besonders gute Übertragung einer auf das Unterteil wirkenden Kraft auf das Oberteil. Ferner kann auf diese Weise eine besonders stabile Scheibenwischvorrichtung erreicht werden. Entsprechendes gilt für die Befestigungen der Verbindungselemente 18 an dem Oberteil 10.

In der Fig. 5A ist beispielhaft für die Längsachsen der Verbindungselemente 18 eine Längsachse 24 und beispielhaft für die Winkel zwischen den Verbindungselementen 18 und dem Unterteil 12 ein Winkel 26 dargestellt. Die Abstände zwischen dem Oberteil 10 und dem Unterteil 12 werden vor allem durch die Längen der Verbindungselemente 18 bestimmt. Die Längen der Verbindungselemente 18 nehmen, ausgehend von den beiden äußeren Verbindungspositionen 14, 16 bis in etwa zu denjenigen Stellen, an denen die an das Oberteil 10 angebrachte Halterung 6 beginnt, zu. Dadurch bilden Oberteil 10 und Unterteil 12 in der Seitenansicht auf das Wischblatt 2 nach Fig. 5A einen Doppelkeil aus, wobei die Spitzen der beiden Keile in entgegengesetzte Richtungen weisen. Die Verbindungselemente 18 sind knicksteif ausgeführt.

Fig. 5B zeigt eine schematische Darstellung des Wischblatts 2 nach Fig. 5A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an einem Verbindungspositionen 14 und/oder 16, die Form, und durch Filmscharniere an der Verbindung zwischen den Verbindungselementen und dem Ober- bzw. Unterteil gegeben.

In der Darstellung nach Fig. 5B ist zwischen dem Wischblatt 2 und der Scheibe 4 ein kleiner Abstand vorhanden, der hier nur der Verdeutlichung der Scheibe 4 und des Wischblatts 2 dient und der in Realität bei Anlegen des Wischblatts 2 an die Scheibe 4 weitgehend so nicht vorhanden ist. Des Weiteren befindet sich typischerweise an der dem Oberteil 10 abgewandten Unterseite des Unterteils 12 eine Wischlippe, welche zum Wischen auf der Scheibe 4 aufsetzt. Aus Gründen der Übersichtlichkeit ist die Wischlippe in den Figuren 5A und 5B nicht dargestellt.

Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

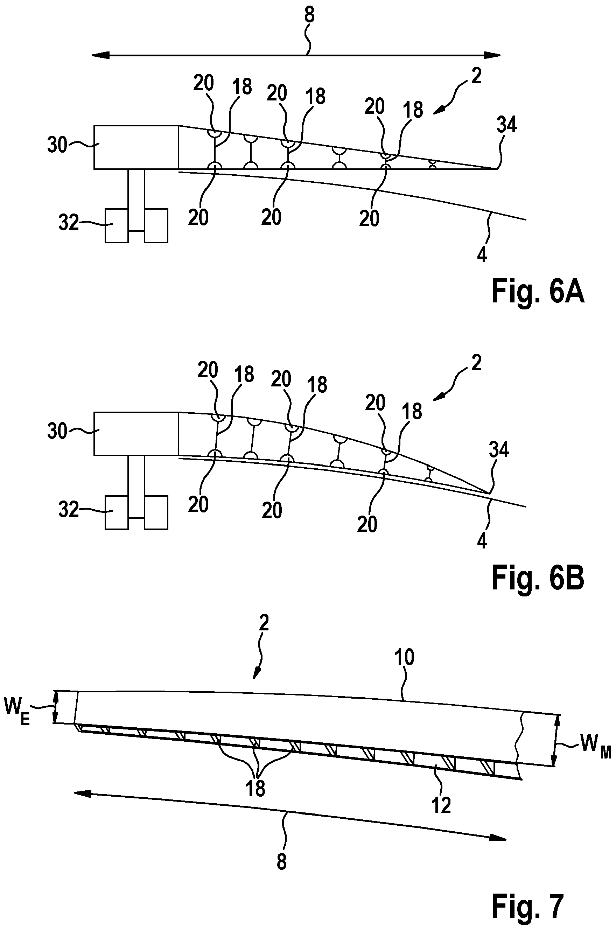

Figuren 5A und 5B zeigen ein Wischblatt 2 mit einer Längserstreckung 8, die sich im Wesentlichen zwischen den Verbindungspositionen 14 und 16 erstreckt. Eine solche Anordnung wird häufig für Frontscheibenwischer verwendet. Alternative kann ein Scheibenwischvorrichtung jedoch auch nur eine Verbindungsposition aufweisen, was in Analogie zu den Figuren 5A und 5B eine Halbierung der Scheibenwischvorrichtung entspricht, und wobei zum Beispiel an einer Position der Halterung 6 eine Drehachse vorgesehen. Eine solche Anordnung wird häufig für Heckscheibenwischer verwendet. Dies ist beispielhaft unter anderem in den Figuren 6A und 6B dargestellt. Optionale Ausgestaltungen und Details, wie Sie in den einzelnen Ausführungsformen beschrieben sind, können im Allgemeinen für beide Varianten einer Anordnung eine Scheibenwischvorrichtung verwendet werden.

Figur 6A zeigt eine schematische Darstellung eines weiteren Ausführungsbeispiels der erfindungsgemäßen Scheibenwischvorrichtung in der Grundstellung. Die Scheibenwischvorrichtung ist hier ein Wischerarm mit einem integrierten Wischblatt 2, das an einem Befestigungsteil 30 angebracht ist. Das Befestigungsteil 30 ist mit einem Wischermotor 32 verbunden, der das Befestigungsteil 30 zum Wischen der Scheibe 4 antreibt. Das Wischerblatt 2 ist keilförmig ausgestaltet, wobei ein Ende des Oberteils 10 an einer äußeren Verbindungsposition 34 mit einem Ende des Unterteils 12 fest verbunden ist. Das jeweils andere Ende des Oberteils 10 und des Unterteils 12 sind an dem Befestigungsteil 30 befestigt. Betreffend den grundlegenden Aufbau und insbesondere die Befestigungen der Verbindungselemente 18 entspricht die Scheibenwischvorrichtung nach Fig. 6A prinzipiell derjenigen nach Fig. 5A.

Fig. 6B zeigt eine schematische Darstellung des Wischblatts 2 mit integriertem Wischerarm 30 nach Fig. 5B in einer an die Scheibe 4 angelegten Stellung. Auch hier wirken von unten aus der Richtung der Scheibe 4 Druckkräfte auf das Unterteil 12 des Wischblatts 2, so dass sich das Unterteil 12 und das Oberteil 10 in Richtung der Scheibe 4 biegen.

Sowohl in FIG. 5A als auch in FIG. 6A ist das Wischblatt in seiner nicht an die Scheibe angelegten Stellung derart dargestellt, dass das Unterteil 12 im Wesentlich gerade ausgebildet ist. Gemäß noch weiteren Ausführungsformen, die mit anderen Ausführungsformen kombiniert werden können, ist das Unterteil im unbelasteten Zustand konvex ausgebildet, d.h. mit einer Wölbung, die in einem Mittelbereich vom Oberteil weg ragt. Die Scheibenwischvorrichtung gemäß der hier beschriebenen Ausführungsformen können typischerweise bei Kontakt mit eine Scheibe ausgehend von der konvexen Form des Unterteils, dann die entsprechende konkave Form des Unterteils, die sich an die Scheibe anpasst, annehmen.

Figur 7 eine schematische perspektivische Darstellung eines Wischblatts 2 einer Scheibenwischvorrichtung gemäß Ausführungsformen der Offenbarung. Wie in Figur 7 dargestellt ist, weist das Wischblatt 2 an den äußeren Verbindungspositionen, an welchem die Enden des langgestreckten Oberteils 10 und des Unterteils 12 miteinander verbunden sind eine äußere Breite W_{E} auf. Gemäß typischen Ausführungsformen ist die äußere Breite W_{E} mindestens 15 mm, insbesondere mindestens 20 mm, insbesondere mindestens 25 mm.

Gemäß Ausführungsformen der Offenbarung, die mit anderen Ausführungsformen kombiniert werden können, nimmt die Breite des Wischblatts 2 von den äußeren Verbindungspositionen in Richtung des Befestigungsteils 30 oder der Halterung 6, an der das Wischblatt an dem Scheibenwischerarm befestigt werden kann, zu. In Figur 7 ist beispielhaft eine innere Breite mit W_{M} bezeichnet. Gemäß typischen Ausführungsformen ist die innere Breite W_{M} mindestens 20 mm, insbesondere mindestens 25 mm, insbesondere mindestens 30 mm.

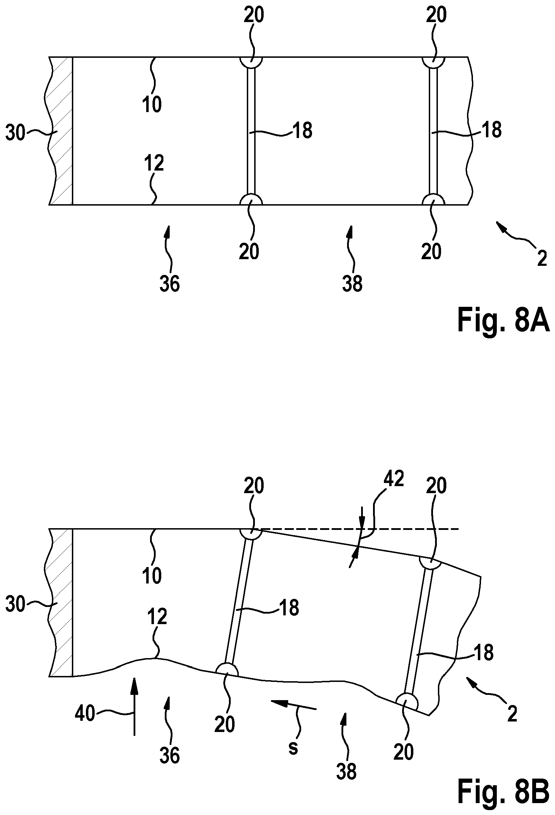

Fig. 8A zeigt eine schematische Darstellung eines Ausschnitts des Wischblatts 2 gemäß dem Ausführungsbeispiel nach Fig. 6A, in dem sich das Wischblatt 2 in der Grundstellung befindet. Dargestellt ist der linke Endbereich des Wischblatts 2, in dem ein Ende des Oberteils 10 und ein Ende des Unterteils 12 an dem Befestigungsteil 30 befestigt sind. Fig. 8A zeigt ausgehend von dem Übergang vom Befestigungsteil 30 zu dem Wischblatt 2 die ersten beiden Verbindungselemente 18, die zwei Wischblattelemente 36 und 38 begrenzen. Die Verbindungselemente 18 sind über Filmscharnier 20 an dem Oberteil 10 und dem Unterteil 12 befestigt.

Fig. 8B zeigt eine schematische Darstellung eines Ausschnitts des Wischblatts 2 gemäß dem Ausführungsbeispiel nach Fig. 6B, in dem das Wischblatt 2 an die Scheibe 4 angelegt ist. Es wirken von unten aus Richtung der Scheibe Druckkräfte auf das Unterteil 12. Stellvertretend für die Druckkräfte ist in der Fig. 8B eine Drucckraft 40 dargestellt. Die Druckkraft 40 bewirkt ein Wölben und Verbiegen des Unterteils 12 des Wischblattelements 36. Dadurch wird das Filmscharnier 20 des ersten Verbindungselements 18 um einen Weg s nach links verschoben. Das zweite Wischblattelement 38 biegt sich nach unten in die Richtung, aus der die Druckkraft 40 kommt, und schmiegt sich an die Scheibe an. Dabei entsteht zwischen dem ersten Wischblattelement 36 und dem zweiten Wischblattelement 38 ein Winkel 42. Ferner bildet sich eine weitere Druckkraft, die dann auf das Unterteil 12 des zweiten Wischblattelements 38 wirkt und ein weiteres Verbiegen des zweiten Wischblattelements 38 nach unten verhindert. Es entsteht eine Kettenreaktion zum rechten benachbarten Wischblattelement bis zum Ende des Wischblatts 2.

Gemäß den hier beschriebenen Ausführungsformen können Fin-Ray Scheibenwischvorrichtung für Fahrzeugscheiben auf besonders günstige Weise und/oder für eine Mehrzahl unterschiedlicher Einsatzgebiete hergestellt werden. Durch die vorliegenden Ausführungsformen der Scheibenwischvorrichtung mit der Stoppvorrichtung gemäß den hierin beschriebenen Ausführungsformen wird eine Scheibenwischvorrichtung bereitgestellt, die besonders widerstandsfähig ist. Insbesondere kann durch die hierin beschrieben Ausführungsformen eine übermäßige Belastung der Filmscharniere vermieden, was zu einer hohen Langlebigkeit der Scheibenwischvorrichtung führt.

## Patentansprüche

1. Scheibenwischvorrichtung für ein Fahrzeug, insbesondere ein Kraftfahrzeug, umfassend ein Wischblatt (2) mit
- einem langgestreckten Oberteil (10), das zumindest teilweise biegbar ausgestaltet ist,
- einem langgestreckten Unterteil (12), das zumindest teilweise biegbar ausgestaltet ist, und
- mehreren Verbindungselementen (18) zum Verbinden des Oberteils (10) und des Unterteils (12), wobei die Verbindungselemente (18) entlang einer Längserstreckung (8) des Wischblatts (2) voneinander beabstandet sind, wobei die Verbindungselemente (18) ausgelegt sind, um eine Bewegung des Oberteils (10) und des Unterteils relativ zu einander mit einer Bewegungskomponente entlang einer Längserstreckung (8) des Wischblatts (2) zu ermöglichen, wobei die mehreren Verbindungselemente (18) knicksteif ausgebildet sind, und wobei die Verbindungselemente (18) über jeweils ein Filmscharnier (20) mit dem Oberteil (10) und/oder mit dem Unterteil (12) verbunden sind, und
- eine Stoppvorrichtung (50), welche konfiguriert ist, um eine Rotationsbewegung der Verbindungselemente (18) relativ zu zumindest einem von dem langgestreckten Oberteil (10) und dem langestreckten Unterteil (12) zu begrenzen, **dadurch gekennzeichnet, dass** die Stoppvorrichtung (50) dadurch gebildet wird, dass das Filmscharnier (20) zumindest teilweise in einer Aussparung (11) des langgestreckten Oberteils (10) und/ oder Unterteils (12), insbesondere in einer Aussparung (11) des langgestreckten Unterteils (12), angeordnet ist oder die Stoppvorrichtung (50) durch eine Vielzahl von Fortsätzen (24) gebildet wird, welche an dem langgestreckten Oberteil (10) und/oder Unterteil (12) angeordnet sind und sich im Wesentlichen quer zur Längserstreckung (8) des Wischblatts (2) erstrecken, um eine Rotationsbewegung einer Vielzahl von Verbindungselementen (18) relativ zu dem langgestreckten Oberteil (10) und/oder relativ zu dem langgestreckten Unterteil (12) zu begrenzen oder die Stoppvorrichtung (50) zumindest an einer Vielzahl der Enden der Verbindungselemente (18) angeordnet ist und durch zumindest einen verbreiterten Endbereich (23) an der Vielzahl der Enden der Verbindungselemente gebildet wird, um eine Rotationsbewegung der Verbindungselemente (18) relativ zu dem langgestreckten Oberteil (10) und/oder relativ zu dem langgestreckten Unterteil (12) zu begrenzen.

2. Scheibenwischvorrichtung nach Anspruch 1, wobei das Filmscharnier (20) einteilig mit dem Verbindungselement (18) und/ oder dem Oberteil (10) oder dem Unterteil (12) ausgebildet ist.

3. Scheibenwischvorrichtung nach einem der Ansprüche 1 bis 2, wobei das Filmscharnier (20) eine Dicke von 0,1 mm bis 0,8 mm, insbesondere 0,2 bis 0,4 mm aufweist.

4. Scheibenwischvorrichtung nach einem der Ansprüche 1 bis 3, wobei das Filmscharnier (20) eine Biegesteifigkeit von 75 Nmm/rad oder kleiner haben.

5. Scheibenwischvorrichtung nach einem der Ansprüche 1 bis 4, wobei das Filmscharnier (20) aus mindestens einem Material aus der Gruppe bestehend aus: POM, PA, TPE, insbesondere TPE-S, TPE-O, TPE-U, TPE-A TPE-V und TPE-E ist.

6. Scheibenwischvorrichtung nach einem der Ansprüche 1 bis 5, wobei das Filmscharnier (20) zumindest einen ersten Durchbruch (25) quer zu einer Längserstreckung des Filmscharniers (20) aufweist.

7. Scheibenwischvorrichtung nach einem der Ansprüche 1 bis 6, wobei das Oberteil (10) in einem Bereich, in welchem das Filmscharnier (20) angeordnet ist, zumindest einen zweiten Durchbruch (26) in Dickenrichtung des Oberteils (10) aufweist.

8. Scheibenwischvorrichtung nach einem der Ansprüche 1 bis 7, wobei das Filmscharnier (20) durch ein 2-Komponenten Spritzverfahren hergestellt ist.

## Claims

1. Windscreen wiping device for a vehicle, in particular a motor vehicle, comprising a wiper blade (2) having
- an elongated top part (10), which is configured to be at least partially bendable,
- an elongated bottom part (12), which is configured to be at least partially bendable, and
- a plurality of connecting elements (18) for connecting the top part (10) and the bottom part (12), wherein the connecting elements (18) are spaced apart from one another along a longitudinal extent (8) of the wiper blade (2), wherein the connecting elements (18) are configured to allow for a movement of the top part (10) and of the bottom part relative to one another with a movement component along a longitudinal extent (8) of the wiper blade (2), wherein the plurality of connecting elements (18) are designed to be resistant to buckling, and wherein the connecting elements (18) are connected to the top part (10) and/or to the bottom part (12) in each case via a film hinge (20), and
- a stop device (50), which is configured to delimit a rotational movement of the connecting elements (18) relative to at least one of the elongated top part (10) and the elongated bottom part (12), **characterized in that** the stop device (50) is formed by virtue of the fact that the film hinge (20) is arranged at least partially in a cutout (11) in the elongated top part (10) and/or bottom part (12), in particular in a cutout (11) in the elongated bottom part (12), or the stop device (50) is formed by a multiplicity of extended sections (24), which are arranged on the elongated top part (10) and/or bottom part (12) and extend substantially transversely in relation to the longitudinal extent (8) of the wiper blade (2), in order to delimit a rotational movement of a multiplicity of connecting elements (18) relative to the elongated top part (10) and/or relative to the elongated bottom part (12), or the stop device (50) is arranged at least at a multiplicity of the ends of the connecting elements (18) and is formed by at least one widened end region (23) at the multiplicity of the ends of the connecting elements, in order to delimit a rotational movement of the connecting elements (18) relative to the elongated top part (10) and/or relative to the elongated bottom part (12).

2. Windscreen wiping device according to Claim 1, wherein the film hinge (20) is formed in a single part with the connecting element (18) and/or the top part (10) or the bottom part (12).

3. Windscreen wiping device according to either of Claims 1 and 2, wherein the film hinge (20) has a thickness of 0.1 mm to 0.8 mm, in particular 0.2 to 0.4 mm.

4. Windscreen wiping device according to one of Claims 1 to 3, wherein the film hinge (20) has a flexural rigidity of 75 Nmm/rad or less.

5. Windscreen wiping device according to one of Claims 1 to 4, wherein the film hinge (20) is made of at least one material from the group consisting of: POM, PA, TPE, in particular TPE-S, TPE-O, TPE-U, TPE-A, TPE-V and TPE-E.

6. Windscreen wiping device according to one of Claims 1 to 5, wherein the film hinge (20) has at least a first aperture (25) transversely in relation to a longitudinal extent of the film hinge (20).

7. Windscreen wiping device according to one of Claims 1 to 6, wherein, in a region in which the film hinge (20) is arranged, the top part (10) has at least a second aperture (26) in the direction of thickness of the top part (10).

8. Windscreen wiping device according to one of Claims 1 to 7, wherein the film hinge (20) is produced by a 2-component injection moulding process.

## Revendications

1. Dispositif d'essuie-glace pour un véhicule, en particulier un véhicule automobile, comprenant un balai d'essuie-glace (2) comprenant
- une partie supérieure allongée (10) qui est configurée de manière au moins en partie flexible,
- une partie inférieure allongée (12) qui est configurée de manière au moins en partie flexible, et
- plusieurs éléments de liaison (18) pour relier la partie supérieure (10) et la partie inférieure (12), les éléments de liaison (18) étant espacés les uns des autres le long d'une étendue longitudinale (8) du balai d'essuie-glace (2), les éléments de liaison (18) étant conçus pour permettre un déplacement de la partie supérieure (10) et de la partie inférieure l'une par rapport à l'autre avec une composante de déplacement le long d'une étendue longitudinale (8) du balai d'essuie-glace (2), la pluralité d'éléments de liaison (18) étant réalisés sous forme rigide en flexion et les éléments de liaison (18) étant reliés à la partie supérieure (10) et/ou à la partie inférieure (12) par le biais d'une charnière à film respective (20), et
- un dispositif d'arrêt (50) qui est configuré pour limiter un mouvement de rotation des éléments de liaison (18) par rapport à au moins l'une parmi la partie supérieure allongée (10) et la partie inférieure allongée (12),
**caractérisé en ce que** le dispositif d'arrêt (50) est réalisé par le fait que la charnière à film (20) est disposée au moins en partie dans un évidement (11) de la partie supérieure allongée (10) et/ou de la partie inférieure allongée (12), en particulier dans un évidement (11) de la partie inférieure allongée (12), ou le dispositif d'arrêt (50) est formé par une pluralité de saillies (24) qui sont disposées au niveau de la partie supérieure allongée (10) et/ou de la partie inférieure allongée (12) et qui s'étendent essentiellement transversalement à l'étendue longitudinale (8) du balai d'essuie-glace (2), afin de limiter un mouvement de rotation d'une pluralité d'éléments de liaison (18) par rapport à la partie supérieure allongée (10) et/ou par rapport à la partie inférieure allongée (12), ou le dispositif d'arrêt (50) est disposé au moins au niveau d'une pluralité des extrémités des éléments de liaison (18) et est formé par au moins une région d'extrémité élargie (23) au niveau de la pluralité des extrémités des éléments de liaison, afin de limiter un mouvement de rotation des éléments de liaison (18) par rapport à la partie supérieure allongée (10) et/ou par rapport à la partie inférieure allongée (12).

2. Dispositif d'essuie-glace selon la revendication 1, dans lequel la charnière à film (20) est réalisée d'une seule pièce avec l'élément de liaison (18) et/ou avec la partie supérieure (10) ou la partie inférieure (12).

3. Dispositif d'essuie-glace selon l'une quelconque des revendications 1 et 2, dans lequel la charnière à film (20) présente une épaisseur de 0,1 mm à 0,8 mm, en particulier de 0,2 mm à 0,4 mm.

4. Dispositif d'essuie-glace selon l'une quelconque des revendications 1 à 3, dans lequel la charnière à film (20) présente une rigidité en flexion de 75 Nmm/rad ou moins.

5. Dispositif d'essuie-glace selon l'une quelconque des revendications 1 à 4, dans lequel la charnière à film (20) est constituée d'au moins un matériau parmi le groupe constitué de : POM, PA, TPE, en particulier TPE-S, TPE-O, TPE-U, TPE-A, TPE-V et TPE-E.

6. Dispositif d'essuie-glace selon l'une quelconque des revendications 1 à 5, dans lequel la charnière à film (20) présente au moins un premier orifice (25) transversalement à une étendue longitudinale de la charnière à film (20).

7. Dispositif d'essuie-glace selon l'une quelconque des revendications 1 à 6, dans lequel la partie supérieure (10), dans une région dans laquelle est disposée la charnière à film (20), présente au moins un deuxième orifice (26) dans la direction de l'épaisseur de la partie supérieure (10).

8. Dispositif d'essuie-glace selon l'une quelconque des revendications 1 à 7, dans lequel la charnière à film (20) est fabriquée par un procédé de moulage à deux composants.
